# EUROPÄISCHE PATENTANMELDUNG

(11) **EP 3 590 715 A1**
(43) Veröffentlichungstag der Anmeldung: **08.01.2020**
(21) Anmeldenummer: 18181856.8
(22) Anmeldetag: 05.07.2018
(51) Int. Cl.: B33Y 10/00, B22F 3/105, B33Y 30/00, B33Y 50/02, B33Y 40/00, B29C 64/153, B29C 64/30, B29C 64/393, B29C 64/10, B29C 64/264, B29C 64/268

(54) **VERFAHREN ZUM BESTIMMEN EINER QUALITÄT EINES MITTELS EINER ADDITIVEN FERTIGUNGSVORRICHTUNG ERZEUGTEN PRODUKTS SOWIE FERTIGUNGSVORRICHTUNG**

(71) Anmelder: Siemens Aktiengesellschaft, 80333 München (DE)
(72) Erfinder: Heinrichsdorff, Frank, 14513 Teltow (DE); Theile, Oliver, 13437 Berlin (DE)

(57) **Zusammenfassung**

Verfahren zum Bestimmen einer Qualität eines mittels einer additiven Fertigungsvorrichtung (1) erzeugten Produkts (2), bei welchem zumindest ein Messwert eines Messsensors (3) der Fertigungsvorrichtung (1) erfasst wird, und bei welchem eine aktuelle Position (5 - 10) einer Erzeugungseinrichtung (4) der Fertigungsvorrichtung (1) zum additiven Erzeugen des Produkts (2) bestimmt wird, und bei welchem in Abhängigkeit des zumindest einen Messwerts und der aktuellen Position (5 - 10) durch Synchronisieren (12) des zumindest einen Messwerts mit der aktuellen Position (5 - 10) die Qualität bestimmt wird, wobei durch eine einzige elektronische Recheneinrichtung (11) der Fertigungsvorrichtung (1) der Messwert erzeugt, die aktuelle Position (5 - 10) bestimmt und das Synchronisieren (12) durchgeführt wird. Ferner wird eine Fertigungsvorrichtung (1) offenbart.

## Beschreibung

Die Erfindung betrifft ein Verfahren zum Bestimmen einer Qualität eines mittels einer additiven Fertigungsvorrichtung erzeugten Produkts. Es wird zumindest ein Messwert eines Messsensors der Fertigungsvorrichtung erfasst. Es wird eine aktuelle Position einer Erzeugungseinrichtung der Fertigungsvorrichtung zum additiven Erzeugen des Produkts bestimmt. Es wird in Abhängigkeit des zumindest einen Messwerts und der aktuellen Position durch Synchronisieren des zumindest einen Messwerts mit der aktuellen Position die Qualität bestimmt. Ferner betrifft die Erfindung eine Fertigungsvorrichtung zum additiven Erzeugen eines Produkts.

Das nachfolgende Interesse richtet sich insbesondere auf Pulverbett-basierte additive Verfahren wie beispielsweise das selektive Lasersintern (SLS) oder das selektive Laserschmelzen (SLM - selective laser melting) oder das selektive Elektronenstrahlschmelzen (sEBM). Dabei werden insbesondere koaxiale oder integral messende Sensoren wie beispielsweise Pyrometer oder Fotodioden zur Detektion der optischen Emission aus dem Bereich des Schmelzbades eingesetzt. Die Detektion der emittierten Strahlung im sichtbaren oder im Infrarotbereich erfolgt dabei für eine coaxiale Konfiguration über einen Spiegel der Fertigungsvorrichtung. Für integral messende Sensoren, wird die emittierte Strahlung von der gesamten Bearbeitungsoberfläche detektiert. Für eine Bewertung der gemessenen Messwerte ist es vorgesehen, dass eine Zuordnung der gemessenen Intensität zu den Belichtungsdaten (aktuelle Position oder aktuell geschriebener Vektor) erfolgen. Da die Strahlablenkung - d.h. Ansteuerung des Spiegels bzw. Ablenkung des Elektronenstrahls - durch einen Echtzeit-Controller mit Pixelfrequenzen von typischerweise 100 Kilohertz bis 100 MHz erfolgt, wird eine Messdatenaufnahme mit mindestens identischer Zeitauflösung benötigt. Die Messdatenaufnahme kann zusätzlich zur Emission von Werkstückoberflächen die aktuelle Strahlposition auslesen und damit die Sensordaten mit der Ist-Position synchronisiert aufzeichnen. Für eine Zuordnung der Sensordaten zu einem Belichtungsvektor ist insbesondere eine anschließende Abgleichung der ausgelesenen Positionen (gegebenenfalls in einem anderen Format als in der Positionsvorgabe) mit den Sollpositionen der einzelnen Belichtungsvektoren nötig.

Aus dem Stand der Technik für die Laserbasierten Verfahren (SLM und SLS) ist es bekannt, dass für die Messdatenaufnahme eine Echtzeit-Komponente (Hardware), typischerweise ein integrierter Schaltkreis der Digitaltechnik (FPGA - field programmable gate array) genutzt wird, der in Echtzeit gleichzeitig den aktuellen Messwert vom Messsensor und die aktuelle Spiegelposition von einer elektronischen Recheneinrichtung, welche auch als Scanner Controller bezeichnet wird, ausließt und zur Aufzeichnung mittels einer elektrischen Recheneinrichtung diese Daten zwischenpuffert. Die Zuordnung der Messwerte zu den Belichtungsvektoren erfolgt anschließend durch einen Abgleich der Vektorstart- und Endpunkte mit den ausgelesenen Spiegelpositionen.

Nachteilig hieran ist, dass zusätzlich eine Zuordnung (Matching) der erzeugten Messwerte zu der aktuellen Position erfolgen muss. Dies ist insbesondere bei der Generierung von Echtzeitinformationen nur durch eine rechenintensive Verarbeitung möglich.

Aufgabe der vorliegenden Erfindung ist es, ein Verfahren sowie eine Fertigungsvorrichtung zu schaffen, mittels welchen aufwandsreduziert eine Qualität eines erzeugten Produkts der Fertigungsvorrichtung bestimmt werden kann.

Diese Aufgabe wird durch ein Verfahren sowie durch eine Fertigungsvorrichtung gemäß den unabhängigen Patentansprüchen gelöst.

Ein Aspekt der Erfindung betrifft ein Verfahren zum Bestimmen einer Qualität eines mittels einer additiven Fertigungsvorrichtung erzeugten Produkts. Es wird zumindest ein Messwert eines Messsensors der Fertigungsvorrichtung erfasst. Es wird eine aktuelle Position, insbesondere eine Strahlposition, einer Erzeugungseinrichtung der Fertigungsvorrichtung zum additiven Erzeugen des Produkts bestimmt. Es wird in Abhängigkeit des zumindest einen Messwerts und der aktuellen Position durch Synchronisieren des zumindest einen Messwerts mit der aktuellen Position die Qualität bestimmt.

Es ist vorgesehen, dass durch eine einzige elektronische Recheneinrichtung der Fertigungsvorrichtung der Messwert erzeugt, die aktuelle Position bestimmt und das Synchronisieren durchgeführt wird.

Dadurch kann aufwandsreduziert die Qualität des erzeugten Produkts bestimmt werden. Insbesondere kann dadurch in Echtzeit der Messwert der jeweiligen aktuellen Position zugeordnet werden. Mit anderen Worten wird innerhalb der einzigen elektronischen Recheneinrichtung bereits das Synchronisieren der aktuellen Position mit dem Messwert durchgeführt. Eine zusätzliche Zuordnung (Matching), beispielsweise in einer laserfertigungsvorrichtungsexternen elektronischen Recheneinrichtung, kann dadurch entfallen, da das Synchronisieren bereits innerhalb der einen einzigen elektronischen Recheneinrichtung der Fertigungsvorrichtung durchgeführt wird. Bei der einzigen elektronischen Recheneinrichtung handelt es sich sozusagen um eine Strahlablenkeinheit (z.B. einen Scanner Controller) mit einer erweiterten Funktionalität, wobei der Scanner Controller für die Bestimmung der Qualität keine zusätzliche Echtzeit-Komponente (Hardware) benötigt.

Insbesondere kann unter der Erzeugung des Messwerts ein Aufnehmen des Messwerts an der aktuellen Position verstanden werden.

Bevorzugt ist die Fertigungsvorrichtung als eine Laserfertigungsvorrichtung zum Erzeugen des Produkts mittels einer Lasereinrichtung ausgebildet oder als Elektronenstrahlschmelzfertigungsvorrichtung, welche auch als Elektronenstrahlschmelzanlage bezeichnet werden kann und zum Erzeugen des Produkts mittels einer Elektronenstrahleinrichtung ausgebildet ist. Insbesondere kann die Elektronenstrahlschmelzfertigungsvorrichtung eine Fertigungsvorrichtung zum Elektronenstrahlschmelzen sein.

Es kann vorgesehen sein, dass die Fertigungsvorrichtung eine Vielzahl, wobei vorliegend Vielzahl insbesondere mehr als ein Messsensor bedeutet, von Messsensoren aufweist und dadurch eine Vielzahl von Messwerten gleichzeitig erfasst werden können. Insbesondere kann dann vorgesehen sein, dass die Vielzahl der gleichzeitig erzeugten Messwerte jeweils der aktuellen Position zugeordnet werden können, sodass zuverlässig und präzise die Qualität des erzeugten Produkts bestimmt werden kann.

Alternativ kann der zumindest eine Messsensor oder einer der Vielzahl von Messsensoren in oder an einer Baukammer zur integralen Messung des zumindest einen Messwerts während des Bauprozesses verwendet werden. Unter der Annahme dass der gemessene Messwert lokal vom aktuellen Bearbeitungspunkt emittiert wird, kann auch in diesem Fall über die Synchronisierung des Messwerts mit der aktuellen Position der Erzeugungseinrichtung eine Zuordnung von den Messwerten zu der aktuellen Position erfolgen.

Insbesondere kann durch das erfindungsgemäße Verfahren der Aufwand, insbesondere die Echtzeit-Hardware und ein Echtzeit-Computerprogrammprodukt (Software) betreffend für die Erfassung und Zuordnung hochratiger Messwerte bei der Qualitätskontrolle der Fertigungsvorrichtung reduziert werden, indem die Synchronisation des Messwerts mit der aktuellen Position in der einen einzigen elektronischen Recheneinrichtung der Fertigungsvorrichtung erfolgt.

Bevorzugt kann vorgesehen sein, dass der zumindest eine Messwert als analoges Signal erfasst wird. Beispielsweise kann der Messwert als Wert zwischen 4 bis 20 Milliampere erfasst werden. Insbesondere ist dann dem jeweiligen Messwert beispielsweise eine entsprechende Leuchtintensität zugeordnet. Anhand des analogen Signals kann dann mittels der elektronischen Recheneinrichtung die Leuchtintensität entsprechend des analogen Signals ausgewertet werden. Ebenfalls ist es möglich, dass als analoges Signal beispielsweise eine Spannung zwischen 0 Volt und 5 Volt erfasst wird und in Abhängigkeit der erfassten Spannung dann der entsprechende Messwert erfasst werden kann. Somit kann einfach und zuverlässig der Messwert erfasst werden und die Qualität des erzeugten Produktes bestimmt werden.

Es hat sich als vorteilhaft erwiesen, die synchronisierten Messwerte auf einer lokalen Speichereinrichtung der elektronischen Recheneinrichtung zwischengespeichert werden und unabhängig von einem Takt der Messwerterzeugung weiter transferiert werden können. Es kann die lokale Speichereinrichtung der Echtzeit-Recheneinrichtung für eine Zwischenspeicherung der synchronisierten und ggf. vorverarbeiteten Messdaten verwendet werden, womit der anschließende Transfer zur weiterverarbeitenden Recheneinheit, insbesondere zu der fertigungsvorrichtungsexternen elektronischen Recheneinrichtung entkoppelt vom Takt der Messwertaufnahme - d.h. ohne Echtzeitanforderungen - erfolgen kann. Dadurch kann präzise die Qualität des Produkts aktuell bestimmt werden. Aktuell bedeutet in diesem Zusammenhang insbesondere, dass die Messwerte in Datenpakete verpackt werden ohne eine Direktzuordnung der Messwerte zu den einzelnen Belichtungsvektoren durchzuführen und somit insbesondere innerhalb eines Synchronisationszeitfensters aktuell bestimmt werden. Dies führt zu einer Steigerung der Qualität des erzeugten Produkts.

Gemäß einer vorteilhaften Ausgestaltungsform wird die aktuelle Position der Erzeugungseinrichtung in Abhängigkeit einer Position einer Ablenkeinrichtung der Erzeugungseinrichtung bestimmt. Insbesondere ist innerhalb der Fertigungsvorrichtung, welche als Laserfertigungsvorrichtung ausgebildet ist, ein Spiegel als Ablenkeinrichtung zum Umlenken eines Laserstrahls der Erzeugungseinrichtung zum Erzeugen des additiv hergestellten Produkts angeordnet. Insbesondere durch Bewegen des Spiegels wird dann der Laserstrahl entsprechend der vorgegebenen Position gedreht und dadurch der Laserstrahl bewegt. Insbesondere wird dann das Produkt in Abhängigkeit der Position des Laserstrahls additiv erzeugt. Insbesondere ist dadurch die aktuelle Position direkt abhängig von der aktuellen Spiegelposition der Erzeugungseinrichtung. Mit anderen Worten kann in Abhängigkeit der Spiegelposition des Spiegels auf die aktuelle Position der Erzeugungseinrichtung rückgeschlossen werden. Insbesondere wird der Spiegel mittels der elektronischen Recheneinrichtung direkt angesteuert. Mit anderen Worten kann in Abhängigkeit eines Steuersignals die Spiegelposition verändert werden. Das Steuersignal lässt wiederum direkt Rückschlüsse auf die aktuelle Position der Erzeugungseinrichtung zu. Dadurch ist es auf einfache Art und Weise ermöglicht, die aktuelle Position der Erzeugungseinrichtung zuverlässig zu bestimmen.

Die als Elektronenstrahlschmelzfertigungsvorrichtung ausgebildete Fertigungseinrichtung kann beispielsweise als Ablenkeinrichtung entsprechende elektromagnetische Linsen aufweisen. Diese Ablenkeinrichtung wird mittels der elektronischen Recheneinrichtung direkt angesteuert und das oben zu dem Spiegel Gesagte gilt dann analog für die elektromagnetische Ablenkeinheit.

Es hat sich weiterhin als vorteilhaft erwiesen, wenn mittels eines Belichtungsvektors die aktuelle Position der Erzeugungseinrichtung bestimmt wird. Insbesondere ist der Belichtungsvektor durch einen Vektorstartpunkt und einen Vektorendpunkt vorgegeben und beschreibt die Spur auf dem Pulverbett, welche zum Erzeugen des Produkts beispielsweise durch die Erzeugungseinrichtung, beispielsweise mittels des Lasers, abgefahren wird. Es wird damit in Abhängigkeit des Belichtungsvektors die Spur auf dem Pulverbett abgefahren. Der Belichtungsvektor kann auch als Scanvektor bezeichnet werden. Mit anderen Worten wird die aktuelle Position nicht durch eine tatsächliche Bestimmung der Position bestimmt, sondern anhand des vorgegebenen Belichtungsvektors wird die Position bestimmt beziehungsweise vorhergesagt. Dadurch kann aufwandsreduziert und dadurch mit wenig Rechenaufwand die aktuelle Position der Erzeugungseinrichtung bestimmt werden. Insgesamt kann dadurch aufwandsreduziert und mit wenig Rechenaufwand das Synchronisieren des Messwerts mit der aktuellen Position durchgeführt werden, was wiederum zu einer aufwandsreduzierten Bestimmung der Qualität des erzeugten Produkts führt.

In einer weiteren vorteilhaften Ausgestaltungsform wird eine Mehrzahl von Belichtungsvektoren mittels einer fertigungsvorrichtungsexternen elektronischen Recheneinrichtung vorgegeben und die aktuelle Position der Erzeugungseinrichtung in Abhängigkeit der vorgegebenen Belichtungsvektoren bestimmt. Hierzu kann beispielsweise von der fertigungsvorrichtungsexternen elektronischen Recheneinrichtung eine Liste mit Belichtungsvektoren vorgegeben werden. Unter fertigungsvorrichtungsextern ist insbesondere zu verstehen, dass diese elektronische Recheneinrichtung nicht direkt Teil der Erzeugungsvorrichtung ist, jedoch beispielsweise mit der Erzeugungsvorrichtung in einem gemeinsamen Gehäuse ausgebildet sein kann. Insbesondere ist die fertigungsvorrichtungsexterne elektronische Recheneinrichtung somit unabhängig von dem eigentlichen Erzeugungsprozess und dient insbesondere zum Bereitstellen der Liste der Belichtungsvektoren. Die Erzeugungseinrichtung fährt dann zur Erzeugung des Produkts die entsprechenden Belichtungsvektoren ab. Die Position kann dann anhand der Mehrzahl der vorgegebenen Belichtungsvektoren zuverlässig bestimmt werden. Dadurch kann aufwandsreduziert die aktuelle Position der Erzeugungseinrichtung in Abhängigkeit der Mehrzahl der Belichtungsvektoren bestimmt werden. Somit kann aufwandsreduziert die Qualität des erzeugten Produkts bestimmt werden.

In einer vorteilhaften Ausgestaltungsform wird als Messwert eine thermische Intensität an der aktuellen Position erfasst. Insbesondere kann als thermische Intensität eine Leuchtintensität und/oder eine Strahlungsintensität erfasst werden. Insbesondere da beim additiven Fertigen das Pulverbett zum Schmelzen gebracht wird, wobei das Schmelzbad und der umgebende erhitzte Bereich thermische Strahlung aussenden, kann die Strahlungsintensität und ggf. spektrale Verteilung erfasst werden. Aus dem Verlauf der gemessenen Intensitäten und spektralen Verteilungen kann auf die Qualität des Fertigungsprozesses rückgeschlossen werden. Insbesondere durch die jeweiligen thermischen Intensitätsmesswerte an der jeweiligen aktuellen Position kann somit zuverlässig die Qualität des Produkts bestimmt werden. Sollten beispielsweise Abweichungen der jeweilig erfassten thermischen Intensitäten untereinander oder gegenüber einer Referenzintensität erfasst werden, so kann dies beispielsweise als Störung im Produktionsprozess des Produkts mit negativen Auswirkungen auf die Qualität des Produkts wahrgenommen werden. Dadurch kann einfach und dennoch zuverlässig die Qualität des Produkts bestimmt werden.

Gemäß einer weiteren vorteilhaften Ausgestaltungsform wird mittels der elektronischen Recheneinrichtung nach dem Synchronisieren zumindest eine statistische Kenngröße, insbesondere eine Mittelwertbestimmung und/oder eine Varianzbestimmung einer Vielzahl von Messwerten, bestimmt. Insbesondere ist es dadurch ermöglicht, dass es zu einer Reduktion der Datenmenge kommen kann, welche beispielsweise dann an eine fertigungsvorrichtungsexterne elektronische Recheneinrichtung weitergegeben werden können. Insbesondere kann dann die Qualität fertigungsvorrichtungsextern bestimmt werden. Durch die Bestimmung der statistischen Kenngröße kann somit zumindest ein vorverarbeitetes Datenpakete für die Auswertung einer fertigungsvorrichtungsexternen elektronischen Recheneinrichtung bereitgestellt werden. Dadurch ist es ermöglicht, dass beispielsweise die fertigungsvorrichtungsexterne elektronische Recheneinrichtung mit einer geringen Rechenkapazität bereitgestellt werden kann, da diese nicht die großen Datenpakete der Fertigungsvorrichtung direkt verarbeiten muss, sondern bereits die reduzierten Datenmengen der elektronischen Recheneinrichtung der Fertigungsvorrichtung bereitgestellt bekommt. Somit kann aufwandsreduziert und ohne zusätzliche Echtzeit-Hardware die Qualität des Produkts bestimmt werden.

Es hat sich weiterhin als vorteilhaft erwiesen, wenn der zumindest eine mit der aktuellen Position synchronisierte Messwert an eine fertigungsvorrichtungsexterne elektronische Recheneinrichtung übertragen wird und die Qualität des Produkts in der fertigungsvorrichtungsexternen elektronischen Recheneinrichtung bestimmt wird. Insbesondere kann dann die Qualität fertigungsvorrichtungsextern bestimmt werden. Es können geringe Datenpakete für die Auswertung der fertigungsvorrichtungsexternen elektronischen Recheneinrichtung bereitgestellt werden. Dadurch ist es ermöglicht, dass beispielsweise die fertigungsvorrichtungsexterne elektronische Recheneinrichtung mit einer geringen Rechenkapazität bereitgestellt werden kann, da diese nicht die großen Datenpakete der Fertigungsvorrichtung direkt verarbeiten muss, sondern bereits die reduzierten Datenmengen beziehungsweise Datenpakte der elektronischen Recheneinrichtung der Fertigungsvorrichtung bereitgestellt bekommt. Somit kann aufwandsreduziert und ohne zusätzliche Echtzeit-Hardware die Qualität des Produkts bestimmt werden.

Es hat sich weiterhin als vorteilhaft erwiesen, wenn das Synchronisieren des zumindest einen Messwerts mit der aktuellen Position in Echtzeit durchgeführt wird. Dadurch kann aktuell die Qualität des Produkts bestimmt werden. Insbesondere führt dies zu einer Fehlerreduktion, da bereits während des Produktionsprozesses des Produkts Gegenmaßnahmen eingeleitet werden können, sollte es zu einer Abweichung der Qualität kommen. Insbesondere kann vorgesehen sein, dass die Erfassung der Messwerte und die Synchronisation mit der aktuellen Position mit einer Frequenz von 100 Kilohertz durchgeführt werden. Mit anderen Worten wird alle 10 Mikrosekunden ein Messwert erfasst und eine aktuelle Position mit dem Messwert synchronisiert. Es kann die lokale Speichereinrichtung der Echtzeit-Recheneinrichtung für eine Zwischenspeicherung der synchronisierten und ggf. vorverarbeiteten Messdaten verwendet werden, womit der anschließende Transfer zur weiterverarbeitenden Recheneinheit, insbesondere zu der fertigungsvorrichtungsexternen elektronischen Recheneinrichtung, entkoppelt vom Takt der Messwertaufnahme - d.h. ohne Echtzeitanforderungen - erfolgen kann. Dadurch kann präzise die Qualität des Produkts aktuell bestimmt werden. Dies führt zu einer Steigerung der Qualität des erzeugten Produkts.

Ein weiterer Aspekt der Erfindung betrifft eine Fertigungsvorrichtung zum additiven Erzeugen eines Produkts, welche zum Bestimmen einer Qualität des Produkts ausgebildet ist. Die Fertigungsvorrichtung weist zumindest einen Messsensor zum Erfassen zumindest ein Messwerts auf. Ferner weist die Fertigungsvorrichtung eine Erzeugungseinrichtung zum additiven Erzeugen des Produkts auf. Die Fertigungsvorrichtung ist dazu ausgebildet, in Abhängigkeit des zumindest einen Messwerts und einer aktuellen Position der Erzeugungseinrichtung durch Synchronisieren des zumindest einen Messwerts mit der aktuellen Position die Qualität zu bestimmen.

Es ist vorgesehen, dass die Fertigungsvorrichtung eine einzige elektronische Recheneinrichtung aufweist, welche dazu ausgebildet ist, den Messwert zu erzeugen, die aktuelle Position zu bestimmen und das Synchronisieren durchzuführen. Insbesondere wird der Messwert aufgenommen.

Gemäß einer vorteilhaften Ausgestaltungsform der Fertigungsvorrichtung ist die Fertigungsvorrichtung als eine Laserfertigungsvorrichtung zum Erzeugen des Produkts mittels einer Lasereinrichtung ausgebildet oder als Elektronenstrahlschmelzfertigungsvorrichtung zum Erzeugen des Produkts mittels einer Elektronenstrahleinrichtung ausgebildet ist. Vorteilhafte Ausführungsformen des Verfahrens sind als vorteilhafte Ausführungsformen der Fertigungsvorrichtung anzusehen. Die Fertigungsvorrichtung weist dazu gegenständliche Merkmale auf, welche eine Durchführung des Verfahrens oder eine vorteilhafte Ausgestaltungsform davon ermöglichen.

Weitere Vorteile und Merkmale sind der folgenden Beschreibung anhand der beigefügten Figur zu entnehmen. In der FIG bezeichnen gleiche Bezugszeichen gleiche Merkmale und Funktionen. Das Ausführungsbeispiel dient lediglich der Erläuterung der Erfindung und soll diese nicht beschränken.

Es zeigen die Figuren:
- FIG 1: eine schematische Ansicht einer Ausführungsform der Fertigungsvorrichtung; und
- FIG 2: in einer schematischen Flussdiagrammdarstellung einen Ablauf für eine Ausführungsform des Verfahrens.

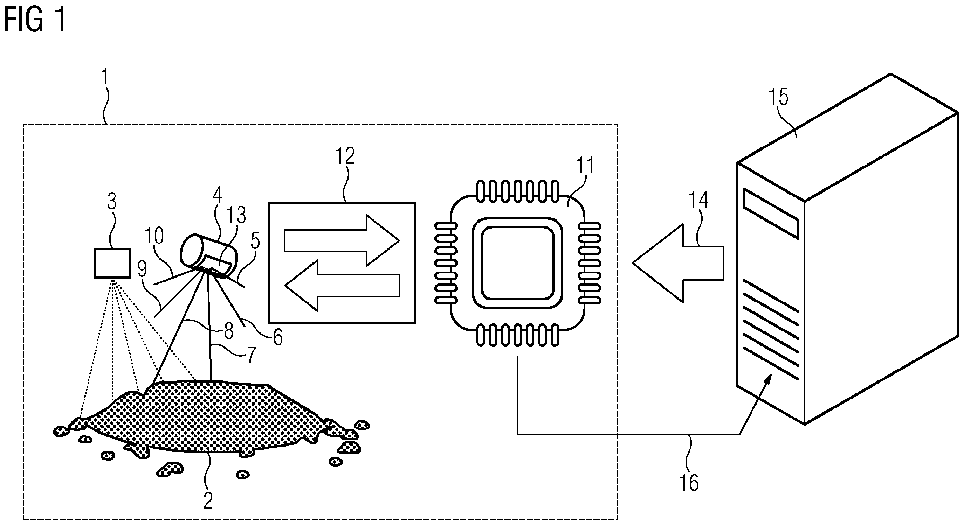

Die FIG 1 zeigt schematisch eine Ausführungsform einer Fertigungsvorrichtung 1. Die Fertigungsvorrichtung 1 ist zum additiven Erzeugen eines Produkts 2 ausgebildet. Es ist vorgesehen, dass mittels der Fertigungsvorrichtung 1 eine Qualität des Produkts 2 bestimmt wird. Die Fertigungsvorrichtung 1 weist zumindest einen Messsensor 3 zum Messen zumindest eines Messwerts auf. Ferner weist die Fertigungsvorrichtung 1 eine Erzeugungseinrichtung 4 auf, mittels welcher das additive Erzeugen des Produkts 2 durchgeführt wird. Die Fertigungsvorrichtung 1 ist dazu ausgebildet, in Abhängigkeit des zumindest einen Messwerts und einer aktuellen Position 5-10 der Fertigungsvorrichtung 1 durch Synchronisieren 12 des zumindest einen Messwerts mit der aktuellen Position 5-10 die Qualität zu bestimmen.

Es ist vorgesehen, dass die Fertigungsvorrichtung 1 eine einzige elektronischen Recheneinrichtung 11 aufweist, welche dazu ausgebildet ist, den Messwert zu erzeugen, insbesondere aufzunehmen, die aktuelle Position 5-10 zu bestimmen und das Synchronisieren 12 durchzuführen.

Im vorliegenden Ausführungsbeispiel sind die aktuellen Positionen 5 - 10 insbesondere durch unterschiedliche Winkelstellungen des Laserstrahls dargestellt.

Bei einem Verfahren zum Bestimmen der Qualität mittels der generativen Fertigungsvorrichtung 1 des erzeugten Produkts 2 wird zumindest ein Messwert des Messsensors 3 der Fertigungsvorrichtung 1 erfasst. Es wird die aktuelle Position 5-10 der Erzeugungseinrichtung 4 der Fertigungsvorrichtung 1 zum generativen Erzeugen des Produkts 2 bestimmt. Es wird in Abhängigkeit des zumindest einen Messwerts und der aktuellen Position 5-10 durch das Synchronisieren 12 des zumindest einen Messwerts mit der aktuellen Position 5-10 die Qualität bestimmt.

Es ist vorgesehen, dass mittels der einen einzigen elektronischen Recheneinrichtung 11 der Fertigungsvorrichtung 1 der Messwert erzeugt, die aktuelle Position 5-10 bestimmt und das Synchronisieren 12 durchgeführt wird.

Insbesondere kann unter der Erzeugung des Messwerts ein Aufnehmen des Messwerts an der aktuellen Position verstanden werden.

Insbesondere ist vorgesehen, dass die Fertigungsvorrichtung 1 als eine Laserfertigungsvorrichtung zum Erzeugen des Produkts 2 mittels einer Lasereinrichtung ausgebildet ist oder als Elektronenstrahlschmelzfertigungsvorrichtung zum Erzeugen des Produkts 2 mittels einer Elektronenstrahleinrichtung ausgebildet ist.

Es kann vorgesehen sein, dass die synchronisierten Messwerte auf einer lokalen Speichereinrichtung der elektronischen Recheneinrichtung 11 zwischengespeichert werden und unabhängig von einem Takt der Messwerterzeugung weiter transferiert werden können. Es kann die lokale Speichereinrichtung der Echtzeit-Recheneinrichtung für eine Zwischenspeicherung der synchronisierten und ggf. vorverarbeiteten Messdaten verwendet werden, womit der anschließende Transfer zur weiterverarbeitenden Recheneinheit, insbesondere zu der fertigungsvorrichtungsexternen elektronischen Recheneinrichtung 15, entkoppelt vom Takt der Messwertaufnahme - d.h. ohne Echtzeitanforderungen - erfolgen kann. Dadurch kann präzise die Qualität des Produkts 2 aktuell bestimmt werden. Dies führt zu einer Steigerung der Qualität des erzeugten Produkts 2.

Es kann vorgesehen sein, dass die Fertigungsvorrichtung 1 eine Mehrzahl von Messsensoren 3 aufweist, wobei mittels der Mehrzahl von Messsensoren 3 eine Mehrzahl von Messwerten erzeugt werden kann, die wiederum der aktuellen Position 5-10 zugeordnet werden können. Dadurch kann präzise und redundant die Qualität des erzeugten Produkts 2 bestimmt werden.

Alternativ kann der zumindest eine Messsensor 3 oder einer der Vielzahl von Messsensoren 3 in oder an einer Baukammer zur integralen Messung des zumindest einen Messwerts während des Bauprozesses verwendet werden. Unter der Annahme, dass der gemessene Messwert lokal vom aktuellen Bearbeitungspunkt emittiert wird, kann auch in diesem Fall über die Synchronisierung des Messwerts mit der aktuellen Position 5 - 10 der Erzeugungseinrichtung 4 eine Zuordnung von den Messwerten zu der aktuellen Position 5- 10 erfolgen.

Insbesondere kann vorgesehen sein, dass die aktuelle Position 5-10 der Erzeugungseinrichtung 4 in Abhängigkeit einer Position einer Ablenkeinrichtung der Erzeugungseinrichtung 4, welche im vorliegenden Beispiel als Spiegel 13 einer als Laserfertigungsvorrichtung ausgebildeten Fertigungsvorrichtung 1, bestimmt wird. Insbesondere ist innerhalb der Fertigungsvorrichtung 1 der Spiegel 13 zum Umlenken eines Laserstrahls der Erzeugungseinrichtung 4 zum Erzeugen des generativ hergestellten Produkts 2 angeordnet. Insbesondere durch Bewegen des Spiegels 13 wird dann der Laserstrahl entsprechend der vorgegebenen Position gedreht und dadurch der Laserstrahl bewegt. Insbesondere wird dann das Produkt 2 in Abhängigkeit der Position des Laserstrahls additiv erzeugt. Insbesondere ist dadurch die aktuelle Position 5 - 10 direkt abhängig von der aktuellen Spiegelposition der Erzeugungseinrichtung 4. Mit anderen Worten kann in Abhängigkeit der Spiegelposition des Spiegels 13 auf die aktuelle Position 5 - 10 der Erzeugungseinrichtung 4 rückgeschlossen werden. Insbesondere wird der Spiegel 13 mittels der elektronischen Recheneinrichtung 11 direkt angesteuert. Mit anderen Worten kann in Abhängigkeit eines Steuersignals die Spiegelposition verändert werden. Das Steuersignal lässt wiederum direkt Rückschlüsse auf die aktuelle Position 5 - 10 der Erzeugungseinrichtung 4 zu. Dadurch ist es auf einfache Art und Weise ermöglicht, die aktuelle Position 5 - 10 der Erzeugungseinrichtung 4 zuverlässig zu bestimmen.

Ferner kann vorgesehen sein, dass mittels eines Belichtungsvektors 14 die aktuelle Position 5-10 der Erzeugungseinrichtung 4 bestimmt wird. Im vorliegenden Ausführungsbeispiel werden insbesondere eine Mehrzahl von Belichtungsvektoren 14 mittels einer fertigungsvorrichtungsexternen elektronischen Recheneinrichtung 15 vorgegeben und die aktuelle Position 5-10 der Erzeugungseinrichtung 4 wird in Abhängigkeit der vorgegebenen Belichtungsvektoren 14 bestimmt. Insbesondere kann dazu eine Liste von Belichtungsvektoren 14 von der fertigungsvorrichtungsexternen elektronischen Recheneinrichtung 15 breitgestellt werden, anhand derer die aktuelle Position 5-10 der Erzeugungseinrichtung 4 bestimmt werden kann.

Unter fertigungsvorrichtungsextern ist insbesondere zu verstehen, dass diese elektronische Recheneinrichtung 11 nicht direkt Teil der Erzeugungsvorrichtung ist, jedoch beispielsweise mit der Erzeugungsvorrichtung in einem gemeinsamen Gehäuse ausgebildet sein kann. Insbesondere ist die fertigungsvorrichtungsexterne elektronische Recheneinrichtung 15 somit unabhängig von dem eigentlichen Erzeugungsprozess und dient insbesondere zum Bereitstellen der Liste der Belichtungsvektoren 14.

Insbesondere kann vorgesehen sein, dass als Messwert eine Leuchtintensität an der aktuellen Position 5-10 erfasst wird. Insbesondere da beim additiven Erzeugen das pulverbasierte Pulverbett zum Schmelzen gebracht wird, wobei das Schmelzbad eine entsprechende leuchtende Farbe mit entsprechender Leuchtintensität einnimmt, kann diese leuchtende Farbe als Leuchtintensität erfasst werden. Sollten dann beispielsweise unterschiedliche Leuchtintensitäten erfasst werden, so kann dies Rückschlüsse auf die Qualität des Fertigungsprozesses liefern. Insbesondere durch die jeweiligen Lichtintensitätsmesswerte an der jeweiligen aktuellen Position 5 - 10 kann somit zuverlässig die Qualität des Produkts 2 bestimmt werden. Sollten beispielsweise Abweichungen der jeweilig erfassten Leuchtintensitäten untereinander oder gegenüber einer Referenzleuchtintensität erfasst werden, so kann dies beispielsweise als Störung im Produktionsprozess des Produkts 2 mit negativen Auswirkungen auf die Qualität des Produkts 2 wahrgenommen werden. Dadurch kann einfach und dennoch zuverlässig die Qualität des Produkts 2 bestimmt werden.

Ferner kann vorgesehen sein, dass der zumindest eine Messwert als analoges Signal erfasst wird. Beispielsweise kann als analoges Signal ein Wert zwischen 4 bis 20 Milliampere erfasst werden. Insbesondere kann dann mittels der elektronischen Recheneinrichtung 11 in Abhängigkeit des analogen Signals beispielsweise die Leuchtintensität ausgewertet werden. Dadurch kann einfach und dennoch zuverlässig der Messwert erfasst werden. Ebenfalls ist es möglich, dass als analoges Signal beispielsweise eine Spannung zwischen 0 Volt und 5 Volt erfasst wird und in Abhängigkeit der erfassten Spannung dann der entsprechende Messwert erfasst werden kann. Somit kann einfach und zuverlässig der Messwert erfasst werden und die Qualität des erzeugten Produktes 2 bestimmt werden. Ferner ist insbesondere vorgesehen, dass mittels der elektronischen Recheneinrichtung 11 nach dem Synchronisieren 12 die Ermittlung von zumindest einer statistischen Kenngröße, wie z.B. eine Mittelwertbestimmung und/oder eine Varianzbestimmung einer Vielzahl von Messwerten durchgeführt. Insbesondere ist es dadurch ermöglicht, dass nur geringe Datenmengen als Datenpakte 16 von der elektronischen Recheneinrichtung 11 an die fertigungsvorrichtungsexterne elektronische Recheneinrichtung 15 übertragen werden. Mit andern Worten findet eine Vorauswertung des synchronisierten Messwerts bereits in der elektronischen Recheneinrichtung 11 statt. Dadurch ist es ermöglicht, dass ohne Echtzeit-Komponente (Hardware) die fertigungsvorrichtungsexterne elektronische Recheneinrichtung 15 dennoch eine Echtzeitauswertung der synchronisierten Messwerte durchführen kann. Somit kann aufwandsreduziert die Qualität des Produkts 2 bestimmt werden.

Insbesondere kann weiterhin vorgesehen sein, dass der zumindest eine mit der aktuellen Position 5-10 synchronisierte Messwert an die fertigungsvorrichtungsexterne elektronische Recheneinrichtung 15 übertragen wird und die Qualität des Produkts 2 in der fertigungsvorrichtungsexternen elektronischen Recheneinrichtung 15 bestimmt wird. Insbesondere kann dann die Qualität fertigungsvorrichtungsextern bestimmt werden. Es können geringe Datenpakete für die Auswertung der fertigungsvorrichtungsexternen elektronischen Recheneinrichtung 15 bereitgestellt werden. Dadurch ist es ermöglicht, dass beispielsweise die fertigungsvorrichtungsexterne elektronische Recheneinrichtung 15 mit einer geringen Rechenkapazität bereitgestellt werden kann, da diese nicht die großen Datenpakete der Fertigungsvorrichtung 1 direkt verarbeiten muss, sondern bereits die reduzierten Datenmengen beziehungsweise Datenpakete 16 der elektronischen Recheneinrichtung 11 der Fertigungsvorrichtung 1 bereitgestellt bekommt. Somit kann aufwandsreduziert und ohne zusätzliche Echtzeit-Hardware die Qualität des Produkts 2 bestimmt werden.

Insbesondere ist vorgesehen, dass das Synchronisieren 12 des zumindest einen Messwerts mit der aktuellen Position 5-10 in Echtzeit durchgeführt wird. Beispielsweise kann das Synchronisieren 12 mit einer Rate von 100 kiloHertz durchgeführt werden, sodass insbesondere beispielsweise alle 10 Mikrosekunden der Messwert der jeweiligen aktuellen Position 5-10 zugeordnet werden kann. Dadurch kann eine Qualitätssteigerung des Produkts 2 realisiert werden, da insbesondere frühzeitig bereits bei einer Abweichung der Qualität Gegenmaßnahmen eingeleitet werden können.

Insgesamt zeigt die FIG 1 einen Scanner Controller mit integrierter Sensordatenpufferung und Synchronisation. Insbesondere zeigt die FIG 1, dass die Fertigungsvorrichtung eine Schnittstelle zum Synchronisieren 12, eine weitere Schnittstelle zum Übertragen des Belichtungsvektors 14 und eine nochmals weitere Schnittstelle zum Übertragen von den Datenpaketen 16 aufweist.

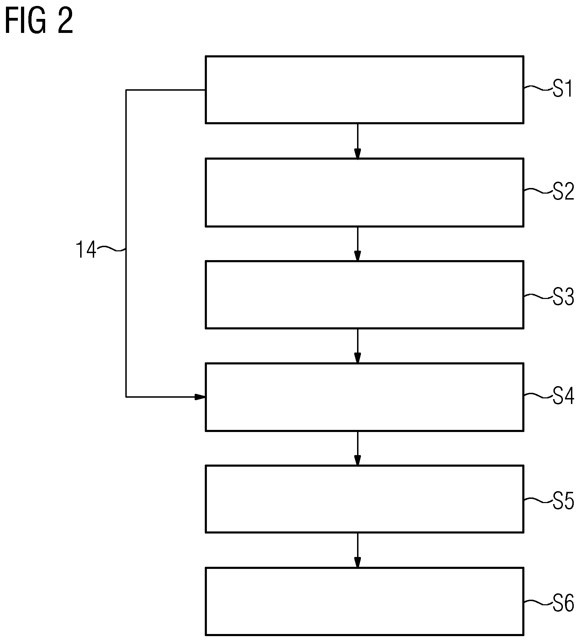

FIG 2 zeigt in einer schematischen Flussdiagrammdarstellung einen Ablauf für eine Ausführungsform des Verfahrens. Im Schritt S1 wird der Belichtungsvektor 14 von der fertigungsvorrichtungsexternen elektronischen Recheneinrichtung 15 an die Fertigungsvorrichtung 1, insbesondere an die elektronische Recheneinrichtung 11, übertragen. Anhand des Belichtungsvektors 14 kann die Spur auf dem Pulverbett zur Erzeugung des Produkts 2 entsprechend abgefahren werden.

Im Schritt S2 erfolgt die Herstellung des Produkts 2. Insbesondere wird mittels der Erzeugungseinrichtung 4, beispielsweise laserbasiert, das Produkt 2 in Abhängigkeit des empfangenen Beleuchtungsvektors 14 hergestellt. Hierzu ist insbesondere vorgesehen, dass mittels der Ablenkeinrichtung 13, beispielsweise des Laserstrahls, entsprechend des empfangenen Belichtungsvektors 14 das Pulverbett entsprechende abgefahren wird und durch Schmelzen das Produkt 2 hergestellt wird.

Im Schritt S3 wird mittels des Messsensors 3 der zumindest eine Messwert an der aktuellen Position 5 - 10 erfasst. Im Schritt S4 wird dann der zumindest eine erfasste Messwert mittels der elektronischen Recheneinrichtung 11 mit der aktuellen Position 5 - 10 synchronisiert. Insbesondere erfolgt dieses Synchronisieren 12 in Abhängigkeit des übertragenen Belichtungsvektors 14 aus dem Schritt S1. Insbesondere ist durch den übertragenen Belichtungsvektor 14 die aktuelle Position 5 - 10 bestimmt.

Im Schritt S5 ist insbesondere vorgesehen, dass die im Schritt S4 synchronisierten Messwerte in einer lokalen Speichereinrichtung der elektronischen Recheneinrichtung 11 zwischengespeichert beziehungsweise zwischengepuffert werden.

Im Schritt S6 werden die Datenpakete 16 dann beispielsweise an die fertigungsvorrichtungsexterne elektronische Recheneinrichtung 15 übertragen. Hierbei kann dann die Qualität des Produkts 2 bestimmt werden.

## Patentansprüche

1. Verfahren zum Bestimmen einer Qualität eines mittels einer additiven Fertigungsvorrichtung (1) erzeugten Produkts (2), bei welchem zumindest ein Messwert eines Messsensors (3) der Fertigungsvorrichtung (1) erfasst wird, und bei welchem eine aktuelle Position (5 - 10) einer Erzeugungseinrichtung (4) der Fertigungsvorrichtung (1) zum additiven Erzeugen des Produkts (2) bestimmt wird, und bei welchem in Abhängigkeit des zumindest einen Messwerts und der aktuellen Position (5 - 10) durch Synchronisieren (12) des zumindest einen Messwerts mit der aktuellen Position (5 - 10) die Qualität bestimmt wird,
**dadurch gekennzeichnet, dass** durch eine einzige elektronische Recheneinrichtung (11) der Fertigungsvorrichtung (1) der Messwert erzeugt, die aktuelle Position (5 - 10) bestimmt und das Synchronisieren (12) durchgeführt wird.

2. Verfahren nach Anspruch 1,
**dadurch gekennzeichnet, dass** die synchronisierten Messwerte auf einer lokalen Speichereinrichtung der elektronischen Recheneinrichtung (12) zwischengespeichert werden.

3. Verfahren nach Anspruch 1 oder 2,
**dadurch gekennzeichnet, dass** die aktuelle Position (5 - 10) der Erzeugungseinrichtung (4) in Abhängigkeit einer Position einer Ablenkeinrichtung (13) der Erzeugungseinrichtung (4) bestimmt wird.

4. Verfahren nach einem der vorhergehenden Ansprüche,
**dadurch gekennzeichnet, dass** mittels eines Belichtungsvektors (14) die aktuelle Position (5 - 10) der Erzeugungseinrichtung (4) bestimmt wird.

5. Verfahren nach Anspruch 4,
**dadurch gekennzeichnet, dass** eine Mehrzahl von Belichtungsvektoren (14) mittels einer fertigungsvorrichtungsexternen elektronischen Recheneinrichtung (15) vorgegeben wird und die aktuelle Position (5 - 10) der Erzeugungseinrichtung (4) in Abhängigkeit der vorgegebenen Belichtungsvektoren (14) bestimmt wird.

6. Verfahren nach einem der vorhergehenden Ansprüche,
**dadurch gekennzeichnet, dass** als Messwert eine thermische Intensität an der aktuellen Position (5 - 10) erfasst wird.

7. Verfahren nach einem der vorhergehenden Ansprüche,
**dadurch gekennzeichnet, dass** mittels der elektronischen Recheneinrichtung (11) nach dem Synchronisieren (12) eine statistische Kenngröße, insbesondere eine Mittelwertbestimmung und/oder eine Varianzbestimmung einer Vielzahl von Messwerten, bestimmt wird.

8. Verfahren nach einem der vorhergehenden Ansprüche,
**dadurch gekennzeichnet, dass** der zumindest eine mit der aktuellen Position (5 - 10) synchronisierte Messwert an eine fertigungsvorrichtungsexterne elektronische Recheneinrichtung (15) übertragen wird und die Qualität des Produkts (2) in der fertigungsvorrichtungsexternen elektronischen Recheneinrichtung (15) bestimmt wird.

9. Verfahren nach einem der vorhergehenden Ansprüche,
**dadurch gekennzeichnet, dass** das Synchronisieren (12) des zumindest einen Messwerts mit der aktuellen Position (5 - 10) in Echtzeit durchgeführt wird.

10. Fertigungsvorrichtung (1) zum additiven Erzeugen eines Produkts (2), welche zum Bestimmen einer Qualität des Produkts (2) ausgebildet ist, und welche zumindest einen Messsensor (3) zum Erfassen zumindest ein Messwerts aufweist, und mit einer Erzeugungseinrichtung (4) zum additiven Erzeugen des Produkts (2), wobei die Fertigungsvorrichtung (1) dazu ausgebildet ist, in Abhängigkeit des zumindest einen Messwerts und einer aktuellen Position (5 - 10) der Erzeugungseinrichtung (4) durch Synchronisieren (12) des zumindest einen Messwerts mit der aktuellen Position (5 - 10) die Qualität zu bestimmen,
**dadurch gekennzeichnet, dass** die Fertigungsvorrichtung (1) eine einzige elektronische Recheneinrichtung (11) aufweist, welche dazu ausgebildet ist, den Messwert zu erzeugen, die aktuelle Position (5 - 10) zu bestimmen und das Synchronisieren (12) durchzuführen.

11. Fertigungsvorrichtung nach Anspruch 10,
**dadurch gekennzeichnet, dass** die Fertigungsvorrichtung als eine Laserfertigungsvorrichtung zum Erzeugen des Produkts mit einer Lasereinrichtung ausgebildet ist oder dass die Fertigungsvorrichtung als Elektronenstrahlschmelzfertigungsvorrichtung zum Erzeugen des Produkts mit einer Elektronenstrahleinrichtung ausgebildet ist.
